# EUROPÄISCHE PATENTSCHRIFT

(11) **EP 3 370 914 B1**
(45) Veröffentlichungstag und Bekanntmachung des Hinweises auf die Patenterteilung: **01.03.2023**
(21) Anmeldenummer: 16787452.8
(22) Anmeldetag: 26.10.2016
(51) Int. Cl.: B23P 9/00, B21J 13/02, B21J 15/12, B44B 5/00, B44B 5/02

(54) **UMFORMVORRICHTUNG SOWIE VERFAHREN ZUM UMFORMEN EINES INNENRANDES EINES RONDENRINGS**
FORMING DEVICE AND METHOD FOR FORMING AN INNER RIM OF AN ANNULAR CIRCULAR BLANK
DISPOSITIF DE FORMAGE ET PROCÉDÉ DE FORMAGE D'UN BORD INTÉRIEUR D'UN FLAN ANNULAIRE

(30) Priorität: 06.11.2015 DE 102015119174
(43) Veröffentlichungstag der Anmeldung: 12.09.2018
(73) Patentinhaber: Schuler Pressen GmbH, 73033 Göppingen (DE)
(72) Erfinder: BRECHLING, Carsten, 89073 Ulm (DE); KNEER, Simon, 73054 Eislingen (DE)
(74) Vertreter: Rüger Abel Patentanwälte PartGmbB
(86) Internationale Anmeldenummer: PCT/EP2016/075851
(87) Internationale Veröffentlichungsnummer: WO 2017/076720

(56) Entgegenhaltungen:
- EP-A2- 0 160 343
- CN-A- 101 147 631
- CN-A- 101 829 719
- CN-A- 101 850 389
- CN-Y- 2 900 009
- DE-A1- 4 137 539
- DE-A1- 10 057 000
- DE-B4-102013 106 375
- US-A- 632 938
- US-A- 4 549 419

## Beschreibung

Die Erfindung betrifft eine Umformvorrichtung nach dem Oberbegriff des Anspruchs 1 sowie ein Verfahren zum Umformen eines Innenrandes eines Rondenrings eine Ronde unter Verwendung einer Umformvorrichtung mit den Merkmalen nach einem der Ansprüche 1 bis 10.

Bei einer Ronde handelt es sich um einen Münzrohling, der in einer Prägestation mittels einer Prägepresse geprägt wird, um eine Münze zu erhalten. Die Ronde kann grundsätzlich einteilig oder mehrteilig ausgeführt sein. Bei einer mehrteiligen Ronde ist wenigstens ein Rondenring und wenigstens ein Rondenkern vorhanden, der das Loch des Rondenrings eingesetzt wird. Es können auch mehrere Rondenringe koaxial zueinander angeordnet werden.

Die DE 198 41 622 C2 beschreibt eine Fügeeinrichtung zum Zusammenführen von mindestens zwei Rohlingen zu einem Teil zur Herstellung einer zweifarbigen Münze. Die Rondenringe werden dabei unterhalb eines Zufuhrkanals hindurchgeführt. Von oben werden die Rondenkerne in die Rondenringe eingesetzt. An einer anschließenden Fügestation werden die ineinander eingesetzten Rondenteile der Ronde miteinander verbunden.

Eine mehrteilige Münze mit einem Rondenring und einem Rondenkern und das Ineinanderfügen ist auch in DE 37 42 745 A1 beschrieben. Dabei werden zunächst die Rondenringen einem Revolverteller zugeführt. An einer Stelle ist ein Schacht mit Rondenkernen angeordnet, die übereinanderliegend gestapelt sind. Der jeweils unterste Rondenkern wird über einen Schieber aus dem Unten offenen Schacht herausgeschoben und über den Rondenring platziert. Dort wird der über einen federvorgespannten Finger in den Rondenring eingedrückt.

Bei derart mehrteiligen Münzen besteht die Forderung, dass sich die Teile nach dem Prägen erst dann voneinander lösen, wenn eine Mindestkraft zwischen den Teilen wirkt. Dadurch soll vermieden werden, dass die Münzen versehentlich in ihre Rondenbestandteile getrennt werden.

Eine mehrteilige Münze, bei der am Rindenring wenigstens ein nach innen ragender Vorsprung vorhanden ist, an den der Rondenkern angeformt wird, ist in US 632 938 A beschrieben.

CN 101850389 A beschreibt eine Umformvorrichtung zum Umformen eines Innenrandes eines Rondenrings nach dem Oberbegriff des Patentanspruches 1. Der Rondenring wird zunächst durch Betätigen eines Zylinders gemeinsam mit einem am Unterwerkzeug vorhandenen Umformwerkzeug in eine Umformposition angehoben. Anschließend wird ein Stößel des Oberwerkzeugs abgesenkt und beaufschlagt das Umformwerkzeug, das dadurch zum Umformen gegen den Innenrand des Rondenrings gedrückt wird. Die CN 101850389 A offenbart die Merkmale des Oberbegriffes des Anspruchs 1.

Aus DE 41 37 539 A1 ist eine Vorrichtung und ein Verfahren zur Herstellung von spiralförmigen Rillen an einer konischen Innenfläche bekannt. Ein konischer Prägestempel wird hierzu gegen die Innenfläche gedrückt und dabei sowohl axial bewegt als auch um seine Längsachse gedreht.

Es kann daher als Aufgabe der vorliegenden Erfindung angesehen werden, eine Vorrichtung und ein Verfahren zu schaffen, mittels den sehr einfach im Rahmen des Münzprägeprozesses ein Rondenring bereitgestellt werden kann, der eine verbesserte Verbindung zum jeweils angrenzenden Ronden ring beziehungsweise Rondenkern bereitstellt.

Diese Aufgabe wird durch eine Umformvorrichtung mit den Merkmalen des Patentanspruches 1 sowie ein Verfahren mit den Merkmalen des Patentanspruches 12 gelöst.

Die Umformvorrichtung zum Umformen eines Innenrandes eines Rondenrings weist ein Unterwerkzeug sowie ein Oberwerkzeug auf. Das Unterwerkzeug hat einen entlang der Arbeitsachse A bewegbaren Stempel, der dazu eingerichtet ist, den Rondenring entlang der Arbeitsachse aus einer Transportebene in eine Umformposition zu bewegen. Bei vertikaler Anordnung mit der Arbeitsachse wird der Rondenring aus der Transportebene in die Umformposition angehoben. Die Arbeitsachse kann aber auch andere Orientierungen, beispielsweise eine horizontale Ausrichtung oder eine gegenüber der horizontalen oder der vertikalen geneigte Ausrichtung aufweisen.

In der oder angrenzend an die Transportebene ist vorzugsweise ein Revolverteller angeordnet, um einen umzuformenden Rondenring zur Umformvorrichtung zu transportieren und diesen koaxial zur Arbeitsachse A zu positionieren. Nach dem Umformen kann der umgeformte Rondenring wieder in die jeweilige Tasche des Revolvertellers eingesetzt und aus der Umformvorrichtung heraustransportiert werden.

Das dem Unterwerkzeug zugeordnete Oberwerkzeug weist eine Fassungshülse auf. In der Umformposition des Rondenrings umschließt die Fassungshülse die Außenkontur des Rondenrings vollständig. Mithilfe dieser Fassungshülse kann sichergestellt werden, dass beim Umformen des Innenrandes des Rondenrings keine oder lediglich eine definierte Zunahme des Außendurchmessers des Rondenrings erfolgt. Vorzugsweise hat die Fassungshülse in der Umformposition des Rondenrings einen Innendurchmesser, der etwas größer ist als der ursprüngliche Außendurchmesser des Rondenrings, so dass der Außendurchmesser des Rondenrings während des Umformvorgangs um einen vorgegebenen Betrag zunimmt, wodurch sich das Spiel des Rondenrings in der Tasche verringert werden kann, so dass die Position des Rondenrings in einer Tasche eines Revolvertellers genauer erfolgen kann.

Das Oberwerkzeug und/oder Unterwerkzeug weisen wenigstens ein Umformwerkzeug auf. In der Umformposition des Rondenrings außerhalb der Transportebene greift das Umformwerkezug zumindest teilweise innen in den Rondenring ein und formt den Innenrand des Rondenrings um. Beispielsweise kann in den Innenrand eine Struktur oder wenigstens eine Vertiefung eingeformt werden. Es ist möglich, den Innenrand des Rondenrings zu ändern, wenigstens eine sich in Umfangsrichtung streckende Fase oder Rille vorzusehen oder mehrere entlang des Umfangs des Innenrandes verteilt angeordnete Vertiefungen mit einer beliebigen Kontur vorzusehen, insbesondere Einzuprägen.

Das Oberwerkzeug weist eine Auswerfereinrichtung auf. Die Auswerfereinrichtung ist dazu eingerichtet, den Rondenring nach dem Umformen aus der Umformposition in die Transportebene zurück zu bewegen bzw. dieses Zurückbewegen zu unterstützen. Nach dem Umformen sitzt der Rondenring in der Fassungshülse und drückt sich an die Innenseite der Fassungshülse an. Über die Auswerfereinrichtung wird der Rondenring nach seiner Umformung mit einer Kraft beaufschlagt, die auf den Rondenring einwirken kann, um ihn aus der Fassungshülse heraus und zurück in die Transportebene zu bewegen, beispielweise in eine Tasche des Revolvertellers. Die Auswerfereinrichtung hat einen federvorgespannten Auswerferring, der beim Bewegen des Rondenrings aus der Transportebene in die Umformposition entgegen einer Federkraft ausgelenkt wird und beim zurückbewegen des Stempels nach dem Umformen des Innenrandes den Rondenring zurück in die Transportebene drückt.

Erfindungsgemäß ist lediglich ein Umformwerkzeug am Stempel des Unterwerkzeugs vorzusehen.

Das Umformwerkzeug ist als Spreizwerkzeug ausgeführt. Das Spreizwerkzeug ist dazu eingerichtet, in der Umformposition des Rondenrings radial zu der Arbeitsachse ausgeweitet zu werden. Dadurch kann es von innen gegen den Innenrand des Rondenrings gedrückt werden, um die Umformung des Innenrandes zu bewirken.

Zur Aufweitung des Spreizwerkzeugs ist am Oberwerkzeug ein Spreizdorn angeordnet. Der Spreizdorn hat einen sich zu seinem freien Ende hin beziehungsweise zum Stempel des Unterwerkzeugs hin verjüngenden Abschnitt. Dieser sich verjüngende Abschnitt hat vorzugsweise eine konische Kontur. Auf diese Weise kann abhängig von der Position des Spreizwerkzeugs entlang der Arbeitsachse A eine definierte Aufspreizung auf einfache Weise erreicht werden.

Das Spreizwerkzeug kann einen Holkörper bilden, insbesondere kann der Spreizdorn zur Aufspreizung in diesen Holkörper eingreifen.

Bei einem Ausführungsbeispiel hat das Spreizwerkzeug mehrere in Umfangsrichtung um die Arbeitsachse verteilt angeordnete elastisch bewegbare Spreizelemente. Die Spreizelemente können elastisch verformbar beziehungsweise elastisch biegbar sein und sich radial zur Arbeitsachse aus ihrer Ruhelage elastisch verformen.

Jedes Spreizelement kann an seiner von der Arbeitsachse weg weisenden Seite einen Umformvorsprung aufweisen. Der Umformvorursprung ist dazu eingerichtet, sich beim Aufspreizen des Spreizwerkzeuges in den Innenrand des Rondenrings einzudrücken. Dadurch kann eine entsprechende Vertiefung im Innenrand des Rondenrings erzeugt werden.

Die elastisch bewegbaren Spreizelemente können nach Art von Blattfedern ausgestaltet sein.

Es ist auch möglich, das an dem Stempel angeordnete Umformwerkzeug um die Arbeitsachse drehbar zu lagern. Beispielsweise kann dadurch eine Rändelung oder eine Windung in den Innenrand des Rondenrings eingebracht werden. Das Umformwerkzeug kann dabei vorzugsweise so ausgeführt sein, dass es einen etwas größeren Durchmesser aufweist als der Innenrand des Rondenrings und sich beim Eindrücken in diesen Innenrand durch die Formgebung des Umformwerkzeugs um die Arbeitsachse dreht. Bei anderen Ausführungen könnte das Umformwerkzeug auch durch einen Antrieb um die Arbeitsachse gedreht werden, beispielsweise wenn komplexere Formen, wie etwa Gewinde oder dergleichen in den Innenrand des Rondenrings eingebracht werden sollen.

Bei einem Ausführungsbeispiel ist das an dem Stempel angeordnete Umformwerkzeug dazu eingerichtet, den zugeordneten unteren Randbereich des Innenrandes zu verformen. Beispielsweise kann dort eine Fase oder eine Rille eingeformt werden. Entsprechend kann zusätzlich oder alternativ an dem Oberwerkzeug ein Umformwerkzeug vorhanden sein, das dazu eingerichtet ist, den zugeordneten oberen Randbereich des Innenrandes zu verformen.

An dem Stempel ist ein Stützring angeordnet, der dazu eingerichtet ist, bei einer Bewegung des Stempels entlang der Arbeitsachse in Richtung auf das Oberwerkzeug zu, den Rondenring aus der Transportebene in die Umformposition zu bewegen. Der Stützring kann an der dem Unterwerkzeug zugeordneten Ringfläche des Rondenrings angreifen und diesen in die Fassungshülse bewegen. Diese Bewegung kann alternativ auch durch einen an dem Stempel vorhandenes Umformwerkzeug ausgeführt werden.

Der Stützring umschließt das am Stempel vorhandenes Umformwerkzeug koaxial. Der Stützring ist dann vorteilhaft, wenn das Umformwerkzeug auf Grund seiner Radialabmessungen oder Ausgestaltung ungeeignet ist, den Rondenring exakt radial zur Arbeitsachse in der Umformposition innerhalb der Fassungshülse zu positionieren.

Der Stützring ist in Richtung der Arbeitsachse federelastisch gelagert. Dadurch wird der Rondenring in der Umformposition mit einer vorgegebenen Kraft in die Fassungshülse bewegt. Der Rondenring befindet sich in der Umformposition zwischen dem Stützring und einer Auswerfereinrichtung am Oberwerkzeug. Die Auswerfereinrichtung definiert dabei die Umformposition und der Stützring federt gegen die Kraft der Auswerfereinrichtung ein, wodurch das Umformwerkzeug, insbesondere das Spreizwerkzeug, am Stempel in den Rondenring eingreifen kann.

Vorzugsweise ist die vorstehende beschriebene Umformvorrichtung an einer Umformstation vorgesehen. Die Umformstation gehört zu einer Anordnung, die auch eine Transporteinrichtung mit einem Revolverteller aufweist, der um eine Revolverachse durch einen Revolverantrieb drehbar ist. Der Revolverantrieb ist vorzugsweise als Schrittschaltantrieb ausgeführt. Während jedem Schritt wird eine Tasche des Revolvertellers mit einem Zu bearbeitenden Rondenring in die Umformvorrichtung transportiert und ein umgeformter Rondenring aus der Umformvorrichtung heraus transportiert.

Das Umformen eines Rondenrings mithilfe der vorstehend beschriebenen Umformeinrichtung beziehungsweise an der Umformstation wird wie folgt durchgeführt:
Zunächst wird vorzugsweise mit Hilfe des Revolvertellers ein umzuformender Rondenring koaxial zur Arbeitsachse in der Umformvorrichtung positioniert. Der Rondenring befindet sich zunächst in der Transportebene, in der der Revolverteller angeordnet ist. Der Stempel des Unterwerkzeugs wird in Richtung auf das Oberwerkzeug zu bewegt. Dabei wird der Rondenring durch ein Umformwerkzeug am Stempel oder einen Stützring oder ein anderes geeignetes Mittel am Stempel aus der Transportebene und beispielsweise aus der Tasche des Revolvertellers in die Umformposition innerhalb der Fassungshülse bewegt. In dieser Umformposition wird der Innenrand des Rondenrings umgeformt. Dabei kann sich der Außendurchmesser des Rondenrings vergrößern, wobei die Vergrößerung durch die Fassungshülse begrenzt ist.

Anschließend führt der Stempel eine Bewegung vom Oberwerkzeug weg aus. Bei dieser Bewegung wird der umgeformte Rondenring zurück in die Transportebene und beispielsgemäß in eine Tasche des Revolvertellers bewegt. Anschließend kann der umgeformte Rondenring aus der Umformvorrichtung heraus transportiert werden.

Vorteilhafte Ausgestaltungen der Erfindung ergeben sich aus den abhängigen Patentansprüchen der Beschreibung und den Zeichnungen. Nachfolgend werden bevorzugte Ausführungsbespiele anhand der beigefügten Zeichnungen im Einzelnen erläutert. Es zeigen:
Figur 1 eine schematische, blockschaltbildähnliche Darstellung einer Umformstation mit einer Transporteinrichtung,
Figur 2 eine schematische, blockschaltbildähnliche Darstellung einer Umformvorrichtung wobei sich der Rondenring in einer Transportebene befindet,
Figur 3 das Ausführungsbeispiel der Umformvorrichtung aus Figur 2, wobei sich der Rondenring in einer Umformposition befindet,
Figur 4 eine teilgeschnittene Seitenansicht eines als Spreizwerkzeug ausgeführten Umformwerkzeugs für ein Ausführungsbeispiel der Umformvorrichtung,
Figur 5 eine Detailansicht des Umformwerkzeugs im Bereich V in Figur 4,
Figuren 6 und 7 jeweils ein nicht erfindungsgemäßes Beispiel einer Umformvorrichtung in einer schematischen, blockschaltbildähnlichen Darstellung und
Figuren 8 bis 20 jeweils eine schematische, perspektivische Darstellung eines umgeformten Rondenrings, wobei verschiedene Strukturen beziehungsweise verschieden geformte Vertiefungen in den Innenrand des Rondenrings eingebracht sind, die sich mit einer erfindungsgemäßen Umformvorrichtung herstellen lassen.

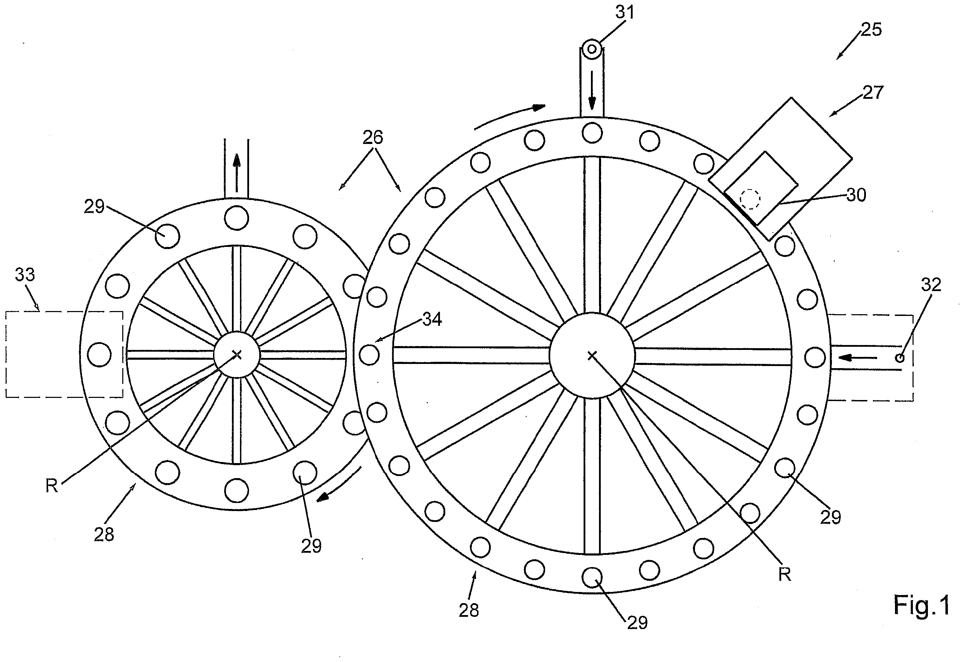

In Figur 1 ist eine Anordnung 25 mit einer Transporteinrichtung 26 und einer Umformstation 27 veranschaulicht. Die Transporteinrichtung 26 weist wenigstens einen und beim Ausführungsbeispiel zwei Revolverteller 28 auf. Jeder Revolverteller 28 ist um eine zugeordnete Revolverachse R antreibbar. Hierzu dient ein oder jeweils ein zugeordneter, nicht dargestellter Revolverantrieb. Der Revolverteller 28 führt um seine Revolverachse R eine Schrittschaltbewegung aus. Der Schrittschaltwinkel ist angepasst an die Anzahl von Taschen 29, die am Außenumfangsbereich jedes Revolvertellers 28 gleichmäßig verteilt angeordnet sind.

Dem einen Revolverteller 28 ist die Umformstation 27 zugeordnet, die eine Umformvorrichtung 30 aufweist. In Drehbewegungsrichtung des Revolvertellers 28 um seine Revolverachse R betrachtet ist vor der Umformstation 27 eine Zuführstelle vorhanden, an der Rondenringe 31 in die Taschen 29 des Revolvertellers 28 eingesetzt werden. In jeder Tasche 29 ist ein einziger Rondenring 31 angeordnet. Bei jeder Schrittschaltbewegung des Revolvertellers 28 wird ein Rondenring 31 in die Umformstation 27 transportiert und dort koaxial zu einer Arbeitsachse A angeordnet. Während des Stillstands des Revolvertellers 28 findet in der Umformstation 27 eine Umformvorgang des Rondenrings 31 statt. Nach dem Umformen wird mit der nächsten Schrittschaltbewegung der Umgeformte Rondenring aus der Umformstation 27 herausbewegt und der nächste umzuformende Rondenring 31 zugeführt.

In Figur 1 ist außerdem veranschaulicht, dass an einer weiteren Stelle ein Rondenkern 32 in den Umgeformten Rondenring 31 eingesetzt werden kann. Die aus dem Rondenring 31 und dem Rondenkern 32 in einer jeweiligen Tasche 29 befindlichen Ronden werden dann über die Transporteinrichtung 26 einer Prägestation 33 zugeführt und dort zu einer Münze geprägt. Dabei wird eine feste Verbindung zwischen dem Rondenkern 32 und dem Rondenring 31 hergestellt. Die Prägestation 33 ist beim Ausführungsbeispiel dem weiteren und beispielsgemäß im Durchmesser kleineren Revolverteller 28 zugeordnet. Die ineinander gesetzten Bestandteile der Ronde (beispielsgemäß der Rondenring 31 und der Rondenkern 32) werden an einer Übergabestelle 34 von dem einen Revolverteller 28, dem die Umformstation 27 zugeordnet ist, an den jeweils anderen Revolverteller 28, dem die Prägestation 33 zugeordnet ist, übergeben.

Heutzutage werden Münzen häufig aus mehreren Teilen hergestellt, beispielsweise um unterschiedliche Farben zu erreichen. Bei dem hier beschriebenen Ausführungsbeispiel weist die Ronde einen Rondenring 31 und einen Rondenkern 32 auf. In Abwandlung hierzu könnten auch mehrere koaxial angeordnete Rondenringe 31 vorgesehen sein. Es ist auch möglich, die Münze aus verschiedenen Materialien herzustellen. Vorzugsweise ist der Rondenring 31, der mit der erfindungsgemäßen Umformvorrichtung 30 bzw. dem erfindungsgemäßen Verfahren umgeformt wird, härter als das sich unmittelbar an den Rondenring 31 anschließende Rondenteil, beispielsgemäß der Rondenkern 32 oder alternativ auch ein weiterer Rondenring. Bei einem Ausführungsbeispiel kann das mit dem umgeformten Rondenring 31 in Kontakt stehende Rondenteil - beispielsgemäß der Rondenkern 32 - aus einem weicheren und leichter umformbaren Material bestehen als der umzuformende Rondenring 31, beispielsweise aus einem nichtmetallischen Material, wie etwa Kunststoff.

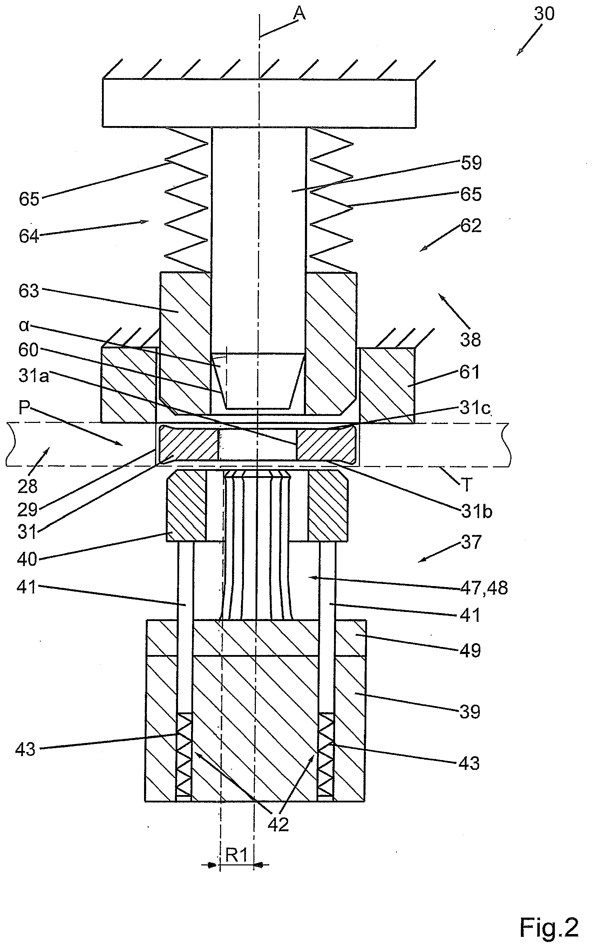

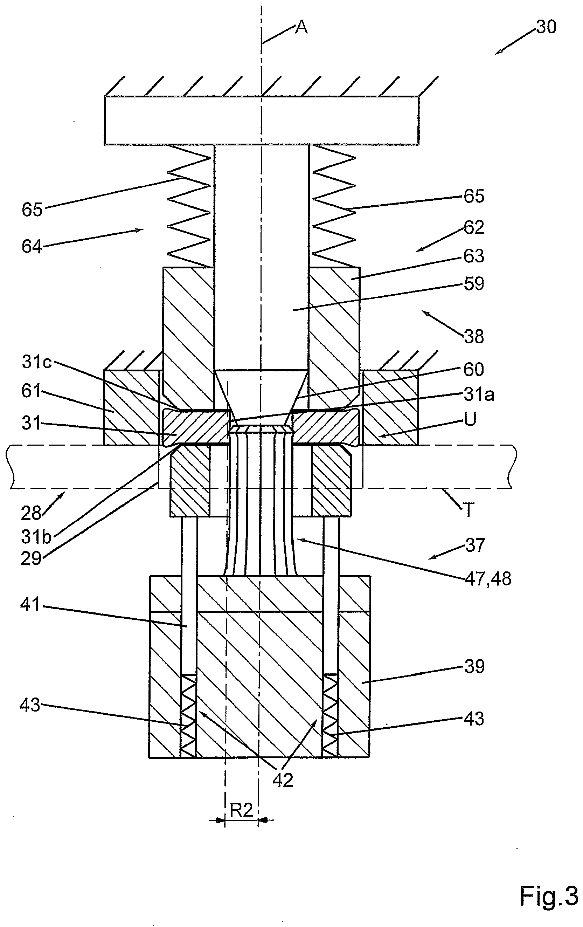

Ein Ausführungsbeispiel der Umformvorrichtung 30 zur Umformung des Rondenrings 31 ist in den Figuren 2 und 3 veranschaulicht. Die Umformvorrichtung 30 weist ein Unterwerkzeug 37 sowie ein Oberwerkzeug 38 auf. Das Unterwerkzeug 37 und das Oberwerkzeug 38 sind entlang der Arbeitsachse A ausgerichtet und liegen einander auf unterschiedlichen Seiten einer Transportebene T gegenüber. Entlang der Transportebene T werden die Rondenringe 31 transportiert, beispielsgemäß durch den Revolverteller 28. Wie in den Figuren 2 und 3 schematisch veranschaulicht, bildet dabei die Unterseite des Revolvertellers 28 die Transportebene T. In der Ausgangslage liegen sich das Unterwerkzeug 37 und das Oberwerkzeug 38 auf den beiden Seiten des Revolvertellers 28 gegenüber.

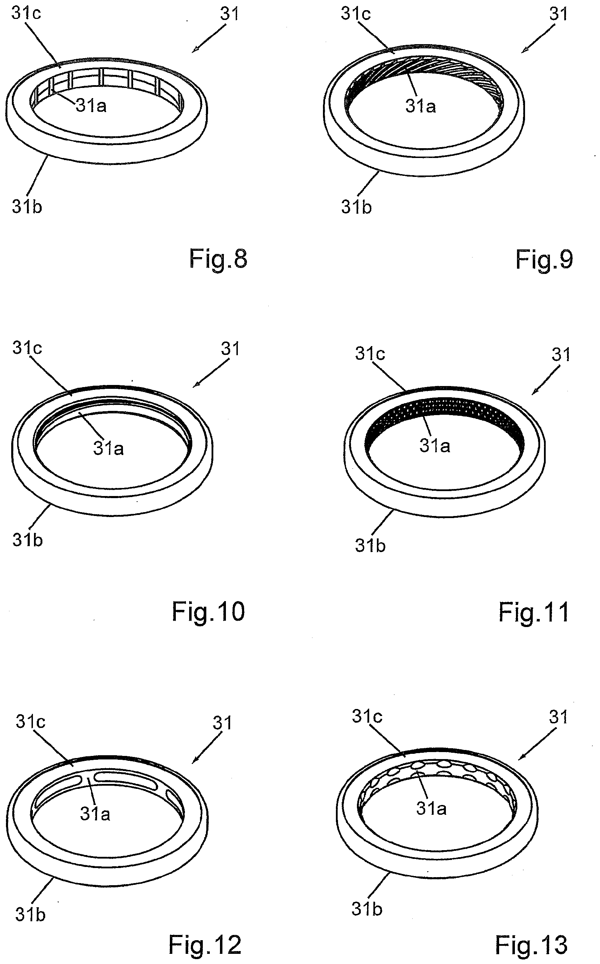

Der Rondenring 31 hat einen durch einen Innenrand 31a begrenzten Innendurchmessers. An den Innenrand 31a schließt sich eine dem Unterwerkzeug 37 zugewandte Unterseite 31b und eine an dem Oberwerkzeug 38 zugewandte Oberseite 31c an (Figuren 8 bis 20). In einer Ausgangsposition P nach dem Zuführen eines noch nicht umgeformten Rondenrings 31 zu der Umformvorrichtung 30 befindet sich der Rondenring 31 in einer Tasche 29 zwischen dem Unterwerkzeug 37 und dem Oberwerkzeug 38 in etwa koaxial zur Arbeitsachse A. Die Revolverachse R des wenigstens einen Revolvertellers 28 ist parallel zur Arbeitsachse A ausgerichtet.

Das Unterwerkzeug 37 hat beim Ausführungsbeispiel einen entlang der Arbeitsachse A bewegbaren Stempel 39. Durch die Bewegung des Stempels 39 entlang der Arbeitsachse A wird der Rondenring 31 aus seiner Ausgangsposition P (Figur 2) in eine Umformposition U mit Abstand zur Transportebene T und beispielsgemäß außerhalb der Tasche 29 des Revolvertellers 28 bewegt. Beim Ausführungsbeispiel gemäß der Figuren 2 und 3 ist hierfür am Stempel 39 ein Stützring 40 koaxial zur Arbeitsachse A angeordnet. Der Stützring 40 befindet sich gegenüber der Unterseite 31b des Rondenrings 31. Beim Ausführungsbeispiel ist der Stützring 40 gegenüber dem Stempel 39 in Richtung der Arbeitsachse A federnd gelagert. Hierfür ist der Stützring über mehrere Stützen 41 in Ausnehmungen, beispielsweise Sacklöchern, des Stempels 39 geführt verschiebbar gelagert. Die dem Stützring 40 entgegengesetzten Enden der Stützen 41 stützen sich mittels einer ersten Federanordnung 42 am Stempel 39 ab. Beim Ausführungsbeispiel ist jeder Stütze 41 eine Feder 43 zugeordnet, die als Schraubenfeder ausgeführt sein kann. In der Ausgangslage des Unterwerkzeugs 37 befindet sich die dem Rondenring 31 zugeordnete Stützfläche des Stützrings 40 vorzugsweise in der Transportebene T.

Bei dem ersten Ausführungsbeispiel der Umformvorrichtung 30 gemäß der Figuren 2 und 3 ist an dem Unterwerkzeug 37 ein Umformwerkzeug 47 angeordnet. Das Umformwerkzeug 47 ist beim Ausführungsbeispiel als Spreizwerkzeug 48 ausgeführt. Es ist dazu eingerichtet, zum Umformen des Innenrandes 31a des Rondenrings radial zur Arbeitsachse A auf gespreizt bzw. aufgeweitet zu werden.

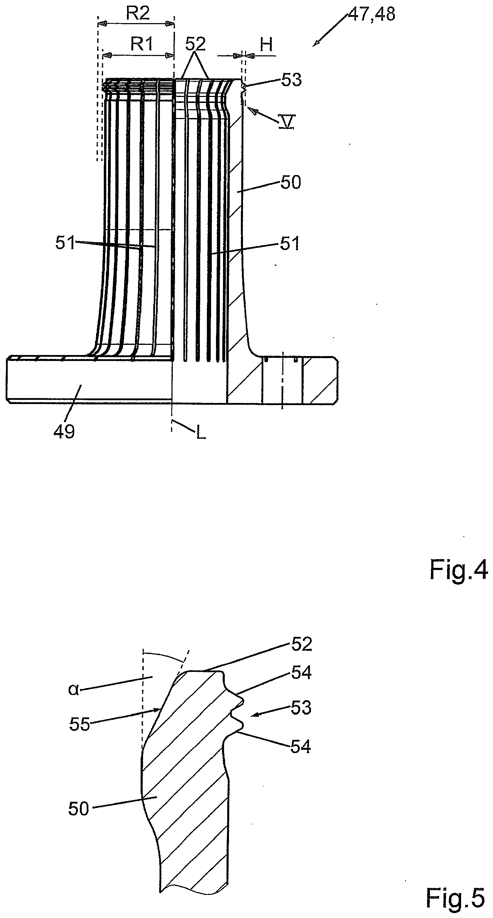

Ein Ausführungsbeispiel des Spreizwerkzeugs 48 ist in den Figuren 4 und 5 veranschaulicht. Das Spreizwerkzeug 48 hat ein Basisteil 49, das beim Ausführungsbeispiel durch eine kreisrunde Platte gebildet ist. Mittels des Basisteils 49 ist das Spreizwerkzeug 48 am Stempel 39 befestigt. Von dem Basisteil 49 erstrecken sich mehrere Spreizelemente 50 weg. Die Spreizelemente 50 sind in Umfangsrichtung um eine Längsachse L des Spreizwerkzeugs 48 gleichmäßig verteilt angeordnet und bilden einen Hohlkörper um die Längsachse L. Unmittelbar benachbarte Spreizelemente 50 sind jeweils durch einen parallel zur Längsachse L verlaufenden Spalt 51 voneinander getrennt. Die Spreizelemente 50 erstrecken sich ausgehend von dem Basisteil 49 zu jeweils einem freien Ende 52 hin. Auf der der Längsachse L abgewandten Außenseite ist im Anschluss an das freie Ende 52 an jedem Spreizelement 50 ein Umformvorsprung 53 vorhanden. Der Umformvorsprung 53 kann eine beliebige Gestalt aufweisen und hat beim Ausführungsbeispiel die Gestalt zweier nebeneinander angeordneter, in etwa dreieckförmiger Zinken 54. Die Ausgestaltung des Umformvorsprungs 53 gibt die Form einer Vertiefung an, die beim Umformen in den Innenrand 31a des Rondenrings 31 eingebracht wird. Abhängig von der gewünschten Form dieser Vertiefung wird der Umformvorsprung 53 gestaltet.

An der dem Umformvorsprung 53 abgewandten Innenseite hat jedes Spreizelement 50 im Anschluss an das freie Ende 52 eine Schrägfläche 55. Die Schrägfläche 55 schließt mit der Längsachse L einen Neigungswinkel αein. Die Schrägflächen 55 aller Spreizelemente 50 bilden - durch die Spalte 51 unterbrochen - eine in etwas konische Fläche. Diese konische Fläche erweitert sich zum freien Ende 52 der Spreizelemente 50 hin.

Mit Abstand zu dem Umformvorsprung 53 ist jedes Spreizelement 50 radial zur Längsachse L schwenkt beweglich und vorzugsweise federelastisch gelagert oder ausgeführt. Bei dem hier beschriebenen Ausführungsbeispiel sind die Spreizelemente 50 einstückig integral ohne Naht- und Fügestelle mit dem Basisteil 49 ausgeführt. Sie sind elastisch radial zur Längsachse L verformbar. Den in Figur 4 gezeigten Ruhe- oder Ausgangszustand nehmen sie ein, wenn keine äußere Kraft zum Aufspreizen des Spreizwerkzeuges 48 auf die Spreizelemente 50 einwirkt. In diesen Ruhezustand kehren sie nach einer Aufspreizung wieder zurück. In diesem Ruhezustand befinden sich die radial zur Längsachse L mit größtem Abstand angeordneten Enden der Umformvorsprünge 53 auf einer Zylindermantelfläche mit einem ersten Radius R1. Dieser erste Radius R1 ist betragsmäßig kleiner als der Radius des Innenrandes 31a des Rondenrings in seinem unverformten Zustand (Figur 2).

Beim Ausführungsbeispiel gemäß der Figuren 4 und 5 sind die Spreizelemente 50 des Spreizwerkzeugs 48 sozusagen nach Art von Blattfedern ausgeführt, so dass sich der Bereich mit dem Umformvorsprung 53 ausgehend von dem Ruhezustand in Figur 4 radial nach außen elastisch aufbiegen lässt, wenn im Bereich des freien Endes 52 eine radial von der Längsachse L nach außen gerichtete Kraft auf das Spreizelement 50 einwirkt. Werden alle Spreizelemente 50 nach radial außen gedrängt, nehmen die radial äußersten Enden der Umformvorsprünge 53 eine Position auf einer Zylindermantelfläche mit einem zweiten Radius R2 ein (Figuren 3 und 4). Vorzugsweise entspricht die Differenz zwischen den beiden Radien R2 und R1 der radialen Höhe H der Umformvorsprünge 53 (Figur 4). In jedem Fall ist der zweite Radius R2 betragsmäßig größer als der erste Radius R1 und die Differenz entspricht der Tiefe der in den Innenrand 31a ein geformten Vertiefung, dem höchstens der Höhe H des Umformvorsprungs 53 entspricht.

Das Umformwerkzeug 47 bzw. das Spreizwerkzeug 48 ist beispielsgemäß koaxial zu der Arbeitsachse A angeordnet, so dass gemäß der Figuren 2 und 3 die Längsachse L und die Arbeitsachse A auf einer gemeinsamen Geraden liegen.

Das Oberwerkzeug 38 hat bei dem Ausführungsbeispiel gemäß der Figuren 2 und 3 einen koaxial zur Arbeitsachse A angeordneten und gegenüber einem maschinell unbeweglichen Spreizdorn 59. Der Spreizdorn hat im Anschluss an sein dem Unterwerkzeug 37 zugeordnetes freies ende einen sich verjüngenden Abschnitt 60. Dieser Abschnitt 60 ist vorzugsweise als konischer Abschnitt ausgeführt. Der Winkel dieses konischen Abschnitts 60 relativ zur Arbeitsachse A entspricht vorzugsweise in etwa dem Neigungswinkel αder Schrägflächen 55 am Spreizwerkzeug 48.

Der sich verjüngende bzw. konische Abschnitt 60 ist koaxial zur Arbeitsachse A durch eine Fassungshülse 61 umschlossen. Die Fassungshülse 61 ist mit radialem Abstand zum Spreizdorn 59 angeordnet. Der Innendurchmesser der Fassungshülse 61 definiert und begrenzt den Außendurchmesser des Rondenrings 31, den dieser nach dem Umformen des Innenrandes 31a aufweist. Beim Ausführungsbeispiel ist der Innendurchmesser der Fassungshülse 61 größer als der Außendurchmesser des Rondenrings 31 in dessen unverformten Ausgangszustand.

Das Oberwerkzeug 38 weist außerdem eine Auswerfereinrichtung 62 auf. Beispielsgemäß hat die Auswerfereinrichtung 32 eine Auswerferhülse 63, die entlang der Arbeitsachse A beweglich gelagert ist und durch eine zweite Federanordnung 64 in eine Ausgangslage zum Unterwerkzeug 37 hin gedrängt wird. Die zweite Federanordnung 64 kann mehrere in Umfangsrichtung um die Arbeitsachse A verteilt angeordnete Federn 65, beispielsweise Schraubenfedern, aufweisen. In der durch die Federanordnung 64 definierten Ausgangslage greift die Auswerferhülse 63 in den radial inneren Bereich der Fassungshülse 61 ein.

Das Ausführungsbeispiel der Umformvorrichtung 30 gemäß der Figuren 2 und 3 arbeitet wie folgt:
Durch eine Schrittschaltbewegung des Revolvertellers 28 wird koaxial zur Arbeitsachse A ein umzuformender Rondenring 31 zwischen dem Unterwerkzeug 37 und dem Oberwerkzeug 31 angeordnet. Anschließend führt der Stempel 39 eine Bewegung entlang der Arbeitsachse A in Richtung auf das Oberwerkzeug 38 zu aus. Dabei wird mittels des Stützrings 40, der die Unterseite 31b des Rondenrings 31 beaufschlagt, der Rondenring 31 von der Transportebene T weg in seine Umformposition U bewegt in der er sich vorzugsweise vollständig innerhalb des Fassungsrings 61 befindet (Figur 3).

Beim Ausführungsbeispiel federt die Auswerferhülse 63 gegen die Kraft der zweiten Federanordnung 64 etwas ein. Wegen der größeren Federkonstanten der zweiten Federanordnung 64 ist der Federweg jedoch kleiner als der der ersten Federanordnung 42, die den Stützring 40 am Stempel 39 abstützt. Dadurch findet eine Relativbewegung zwischen dem Umformwerkzeug 47 und beispielgemäß dem Spreizwerkzeug 48 gegenüber dem Stützring 40 statt. Die Stützfläche des Stützrings 40 liegt an der Unterseite 31b des Rondenrings an, während das Umformwerkzeug 47 in den Rondenring 31 eingreift (Figur 3). Bei dieser Bewegung gelangen die Spreizelemente 50 und beispielsgemäß die Schrägflächen 55 in Kontakt mit dem konischen Abschnitt 60 des Spreizdorns 59 und werden dann radial von der Arbeitsachse A weg nach außen gedrängt. Bei dieser Radialbewegung werden die Umformvorsprünge 53 in den Innenrand 31a des Rondenrings 31 gedrückt und formen jeweils dort eine Vertiefung ein.

Anschließend wird der Stempel 39 entlang der Arbeitsachse A vom Oberwerkzeug 38 weg bewegt. Dadurch, dass die Umformvorsprünge 53 noch in Eingriff mit dem Rondenring 31 sind, wird dieser aus der Fassungshülse 61 entlang der Arbeitsachse A in Richtung zur Transportebene T hinbewegt. Diese Bewegung des Rondenrings 31 aus der Umformposition in der Fassungshülse 61 zurück zu Transportebene T, wird durch die Kraft der zweiten Federanordnung 64 unterstützt, die die Auswerferhülse 63 auf die Oberseite 31c des Rondenrings 31 drückt. Bei dieser Bewegung findet wiederrum eine Relativbewegung zwischen dem Umformwerkzeug 47 und dem Stützring 40 statt. Die Spreizelemente 50 federn radial in Richtung zur Arbeitsachse A hin zurück. Sobald die Kraft durch die Auswerfereinrichtung 62 auf den Rondenring 31 nachlässt, kann sich der Stützring 40 durch die Kraft der ersten Federanordnung 42 vom Stempel 39 weg und relativ zum Umformwerkzeug 47 bewegen, bis sie wiederrum ihre ursprüngliche Stellung einnimmt, wie sie in Figur 2 veranschaulicht ist. Der dann umgeformte Rondenring 31 wird durch den Stützring 40 in der Tasche 29 an der Transportebene T gehalten. Mittels der nächsten Schrittschaltbewegung des Revolvertellers 28 wird dann der umgeformte Rondenring 31 aus der Umformvorrichtung 30 entfernt und der nächste umzuformende Rondenring 31 zugeführt.

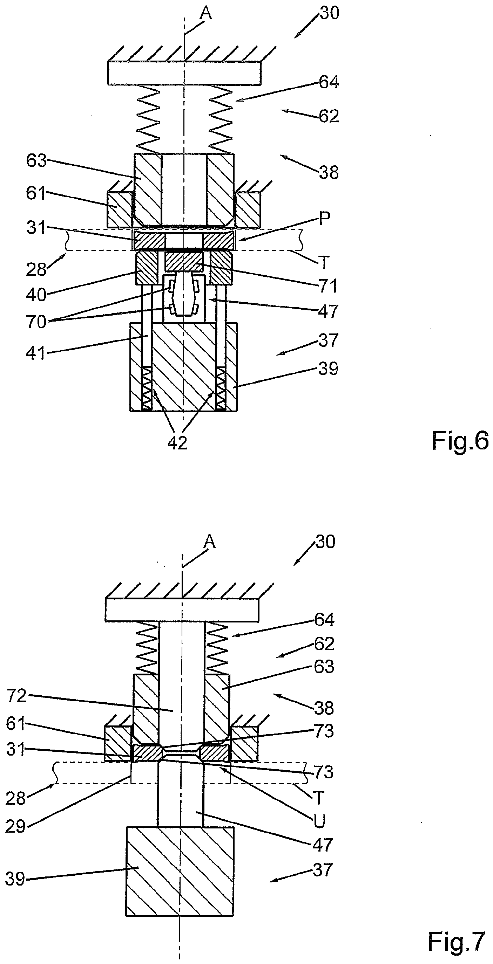

In Figur 6 ist ein nicht erfindungsgemäßes Beispiel einer Umformvorrichtung 30 veranschaulicht. Das Umformwerkzeug 47, das am Stempel 39 angeordnet ist, ist dabei nicht als Spreizwerkzeug ausgeführt sondern zum Einbringen einer Rändelung in den Innenrand 31a des Rondenrings 31. Aus diesem Grund ist das Umformwerkzeug 47 drehbar um die Arbeitsachse A gelagert, beispielsgemäß mittels einer Lagereinrichtung 70 und vorzugsweise einer Wälzlagereinrichtung mit mehreren Wälzlagern. Die Lagereinrichtung 70 ist derart ausgeführt, dass das Umformwerkzeug 47 in Richtung der Arbeitsachse A relativ zum Stempel 39 unbeweglich gehalten ist. Das am Umformwerkzeug 47 angeordnete Rändelwerkzeug 71 kann über eine Bewegung des Stempels 39 in Richtung der Arbeitsachse A bewegt werden und sich dabei um die Arbeitsachse A drehen. Der Außendurchmesser des Rändelwerkzeugs 71 ist größer als der ursprüngliche Innendurchmesser des unverformten Rondenrings 31. Ein Spreizdorn 59 ist bei dieser Ausführungsform im Unterschied zum Ausführungsbeispiel gemäß der Figuren 2 und 3 nicht vorhanden. Ansonsten entspricht der Aufbau dem zuvor beschriebenen Ausführungsbeispiel, so dass auf die vorstehenden Erläuterungen verwiesen werden kann.

Der Rondenring 31 wird, wie im Zusammenhang mit den vorstehenden Ausführungsbeispielen erläutert, in seine Umformposition U bewegt. Durch die relative Bewegung zwischen dem Stützring 40 und dem Umformwerkzeug 47 wird das Rändelwerkzeug 71 in den Rondenring 31 hinein bewegt und führt bei der Bewegung entlang der Arbeitsachse A gleichzeitig eine Drehbewegung um die Arbeitsachse A aus. Dadurch wird eine Rändelung in den Innenrand 31a des Rondenrings 31 eingebracht.

Wenn anstelle einer Rändelung mit einer Ausrichtung (in oder entgegen dem Uhrzeigersinn) eine Kreuzrändelung eingebracht werden soll, können hintereinander zwei Umformvorrichtungen 30 bzw. Umformstationen 27 angeordnet werden, die entsprechend ausgestaltete Rändelwerkzeuge 71 aufweisen.

Bei den vorstehend beschriebenen erfindungsgemäßen Ausführungsbeispielen ist das Umformwerkzeug 47 jeweils am Stempel 39 angeordnet. Bei einem nicht erfindungsgemäßen Beispiel ist es auch möglich, am Oberwerkzeug 38 ein zusätzliches Umformwerkzeug 72 vorzusehen, wie es in Figur 7 schematisch veranschaulicht ist. Dort wirken das am Stempel 39 angeordnete Umformwerkzeug 47 des Unterwerkzeugs 37 und ein damit zusammenarbeitendes weiteres Umformwerkzeug 72 des Oberwerkzeugs 38 zusammen.

Die beiden Umformwerkzeuge 47, 72 sind jeweils koaxial zur Arbeitsachse A angeordnet und haben jeweils ein freies Ende mit einem beispielsweise konischen Umformabschnitt 73. In der Umformposition U drücken die beiden Umformwerkzeuge 47,72 von entgegengesetzten Seiten gegen jeweils einen zugeordneten unteren Randbereich bzw. Oberen Randbereich des Innenrads 31a und formen dort jeweils den Rondenring 31 um. Beispielsweise kann jeweils eine Fase am Übergang zwischen dem Innenrand 31a und der Unterseite 31b bzw. der Oberseite 31c eingeformt werden.

Bei diesem Beispiel ist der Durchmesser des Umformwerkzeugs 47 größer als der Durchmesser des Innenrands 31a, so dass der Rondenring 31 durch das Umformwerkzeug 47 selbst von der Ausgangsposition P in die Umformposition U bewegt werden kann. Auf den Stützring 40 und dessen Lagermittel kann bei diesem Ausführungsbeispiel verzichtet werden. Gegenüber dem Ausführungsbeispiel gemäß der Figuren 2 und 3 ist anstelle des Spreizdorns 59 des Oberwerkzeugs 38 das zusätzliche Umformwerkzeug 72 vorhanden, das unmittelbar auf den Rondenring 31 in dessen Umformposition U einwirkt. In der Umformposition U ist die Auswerferhülse 63 durch die zweite Federanordnung 64 in Richtung zur Transportebene T vorgespannt, sodass nach dem Umformen bei einer Rückzugsbewegung des Stempels 39 der Umgeformte Rondenring 31 aus der Fassungshülse 61 zurück in die Tasche 29 des Revolvertellers 28 bewegt wird.

Das in Figur 7 veranschaulichte nicht erfindungsgemäße Beispiel der Umformvorrichtung 30 kann weiter dadurch abgewandelt werden, das die beiden Umformwerkzeuge 47,72 an ihrem jeweiligen freien Ende, das dem Rondenring 31 zur Umformung zugeordnet ist, andere Konturen im Umformabschnitt 73 aufweisen. Beispielsweise können dort Ringstufen ausgebildet sein, so dass im oberen Randbereich und im unteren Randbereich des Innenrandes 31a des Rondenrings Rillen eingebracht werden. Weiterhin können die Umformabschnitte 73 in Umfangsrichtung um die Arbeitsachse A verteilt angeordnete Erhebungen und/oder Vertiefungen aufweisen, so dass sich auch beliebig andere Einprägungen im oberen Randbereich und im unteren Randbereich des Innenrandes 31a des Rondenrings 31 ausbilden lassen.

In den Figuren 8 bis 20 sind verschiede Strukturen bzw. Formen veranschaulicht, die in den Innenrand 31a eines Rondenrings 31 mittels der Erfindungsgemäßen Umformvorrichtung 30 bzw. des erfindungsgemäßen Verfahrens eingebracht werden können. Diese Formen sind lediglich beispielhaft und können durch beliebig weitere Formen ergänzt werden.

In Figur 8 ist der umgeformte Rondenring 31 gezeigt, wie er beim Ausführungsbeispiel mit der Umformvorrichtung gemäß der Figuren 2 und 3 und mittels des Spreizwerkzeugs 48 erzeugt wird. An dem Innenrand 31a sind Vertiefungen eingeformt, die in Umfangsrichtung nebeneinander angeordnet sind und deren Form dem jeweiligen Umformvorsprung 53 entspricht. Die Vertiefungen sind wegen der Spalte zwischen den Spreizelementen und mithin zwischen den Umformvorsprüngen 53 in Umfangsrichtung geringfügig voneinander beanstandet.

Figur 9 zeigt ein in den Innenrand 31a eingeformtes mehrgängiges Gewinde. Beim Beispiel gemäß Figur 10 ist ein einfaches Gewinde (ein Gewindegang) mit geringer Steigung in den Innenrand 31a geformt.

Der Innenrand 31a beim Beispiel aus Figur 11 weist eine Links-Rechts-Rändelung auf, die mit zwei Umformvorrichtungen gemäß dem Ausführungsbeispiel nach Figur 6 erzeugt werden kann.

In den Innenrand 31a des Rondenrings 31 nach Figur 12 sind mehrere Vertiefungen bzw. Taschen eingeformt, beispielsweise 6 Taschen, die in Umfangsrichtung gleichmäßig verteilt angeordnet sind. Die Taschen haben hier eine nutähnliche Gestalt.

Das in den Innenrand 31a eingebrachte Muster des Ausführungsbeispiels nach Figur 13 wird als "Blume" bezeichnet. Im oberen Randbereich und im unteren Randbereich des Innenrands 31a sind in Umfangsrichtung längliche konkave Vertiefungen eingeformt, die in Umfangsrichtung gleichmäßig verteilt angeordnet sind.

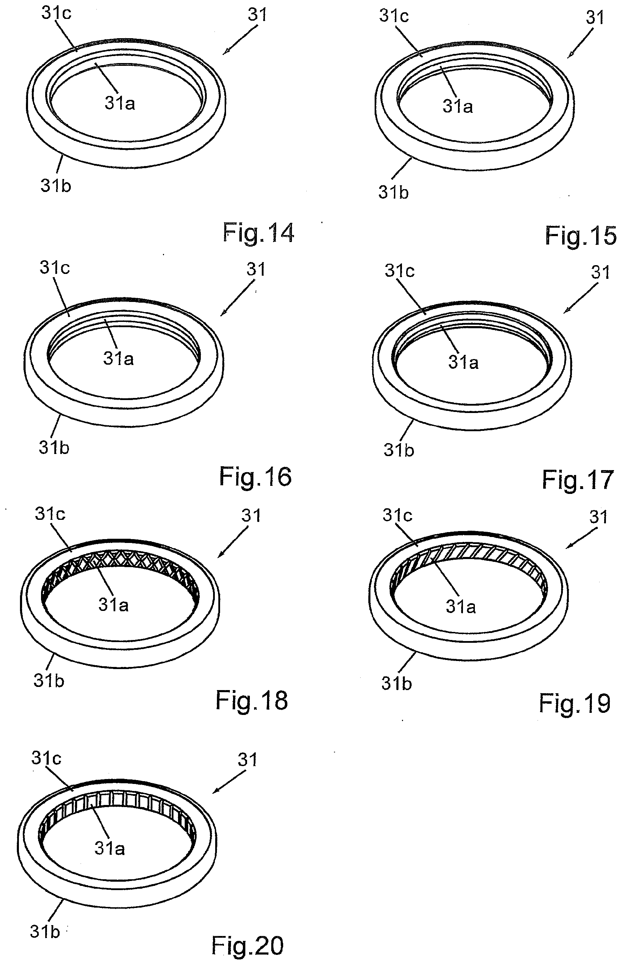

Der Innenrand 31a kann beim Ausführungsbeispiel eine einzige Fase am oberen Randbereich (Figur 14) oder alternativ am unteren Randbereich oder auch sowohl am oberen Randbereich, als auch im unteren Randbereich jeweils eine Fase aufweisen (Figur 15).

In den Innenrand 31a kann beispielsweise auch eine ringsumlaufende Rille (Figur 16) oder auch mehrere in Axialrichtung beanstandete ringsumlaufende Rillen (Figur 17) eingebracht werden.

Bei den Ausführungsbeispielen gemäß der Figuren 18 bis 20 sind Zähne am Innenrand 31a ausgebildet und über den Umfang verteilt angeordnet. Die Zähne sind durch Nuten beanstandet, die sich in Axialrichtung (Figur 20) oder schräg geneigt zur Axialrichtung (Figur19) oder gekreuzt jeweils schräg zur Axialrichtung (Figur 18) erstrecken.

Eine Vielzahl von Abwandlungen ist bei der Umformung des Innenrandes 31a möglich und die hier beschriebenen Ausführungsformen sind lediglich beispielhaft. Allgemein beschrieben wird der Innenrand 31a durch die erfindungsgemäße Vorrichtung oder das erfindungsgemäße Verfahren so umgeformt, dass er von einer einer Zylindermantelfläche entsprechenden Kontur abweicht.

Durch diese Umformung des Innenrandes 31a wird beim anschließenden Prägen der Ronde eine formschlüssige Verbindung zwischen dem Rondenring 31 und dem sich anschließenden Rondenteil, beispielsgemäß dem Rondenkern 32, erreicht. Das Material des sich an den Rondenring 31 anschließenden Rondenteils - beispielsgemäß des Rondenkerns 32 - fließt beim Prägevorgang zum Rondenring 31 hin und passt sich an die Form des Innenrandes 31a an. Sind dort Vertiefungen bzw. Erhöhungen vorhanden, wird eine formschlüssige Verbindung erreicht.

Mittels der erfindungsgemäßen Umformvorrichtung 30 und des damit realisierten Umformverfahrens kann der Rondenring 31 innerhalb des üblichen Zuführprozesses der Ronde zur der Prägestation bzw. der Prägepresse umgeformt werden. Das Herstellen einer Münze ist dadurch erheblich vereinfacht.

Die Erfindung betrifft eine Umformvorrichtung 30 sowie ein Verfahren zum Umformen eines Innenrandes 31a eines Rondenrings 31. Die Umformvorrichtung 30 weist ein Unterwerkzeug 37 mit einem bewegbaren Stempel 39 und eine entlang einer Arbeitsachse A gegenüberliegend zum Unterwerkzeug 37 ein angeordnetes Oberwerkzeug 38 auf. Mittels des Stempels 39 wird der Rondenring 31 aus einer Transportebene T in eine Umformposition U zu dem Oberwerkzeug 38 hin und in das Innere einer Fassungshülse 61 hineinbewegt. Anschließend wird mithilfe eines Umformwerkzeuges 47, 72 der Innenrand 31a umgeformt. Nach dem Umformen wird der Rondenring 31 mittels des Unterwerkzeugs 37 und/oder des Oberwerkzeugs 38 aus der Umformposition U zurück in die Transportebene T bewegt. Die Umformvorrichtung 30 und das Umformverfahren können während der ohnehin vorhandenen Zuführung der Ronden zu der Prägestation bzw. der Prägepresse, beispielsweise während des Transports der Rondenteile bzw. der Ronde mittels eines Revolvertellers erfolgen.

### Bezugszeichenliste:

- 25: Anordnung
- 26: Transporteinrichtung
- 27: Umformstation
- 28: Revolverteller
- 29: Tasche
- 30: Umformvorrichtung
- 31: Rondenring
- 31a: Innenrand des Rondenrings
- 31b: Unterseite des Rondenrings
- 31c: Oberseite des Rondenrings
- 32: Rondenkern
- 33: Prägestation

- 37: Unterwerkzeug
- 38: Oberwerkzeug
- 39: Stempel
- 40: Stützring
- 41: Stütze
- 42: erste Federanordnung
- 43: Feder

- 47: Umformwerkzeug
- 48: Spreizwerkzeug
- 49: Basisteil
- 50: Spreizelement
- 51: Spalt
- 52: freies Ende des Spreizelements
- 53: Umformvorsprung
- 54: Zinken
- 55: Schrägfläche
- 59: Spreizdorn
- 60: verjüngenden Abschnitt
- 61: Fassungshülse
- 62: Auswerfereinrichtung
- 63: Auswerferhülse
- 64: zweite Federanordnung
- 65: Feder

- 70: Lagereinrichtung
- 71: Rändelwerkzeug
- 72: Umformwerkzeug
- 73: Umformabschnitt

- α: Neigungswinkel
- A: Arbeitsachse
- P: Ausgangsposition
- R: Revolverachse
- R1: erster Radius
- R2: zweiter Radius
- T: Transportebene
- U: Umformposition

## Patentansprüche

1. Umformvorrichtung zum Umformen eines Innenrandes (31a) eines Rondenrings (31) einer Ronde,
mit einem Unterwerkzeug (37), das einen entlang einer Arbeitsachse (A) bewegbaren Stempel (39) aufweist,
mit einer koaxial zur Arbeitsachse (A) angeordneten Stützring (40), die mittels einer ersten Federanordnung (42) gegenüber dem Stempel (39) in Richtung der Arbeitsachse (A) federnd am Stempel (39) gelagert ist,
mit einem Oberwerkzeug (38), das eine Fassungshülse (61) aufweist, die den Rondenring (31) in der Umformposition (U) entlang der Außenkontur des Rondenrings (31) vollständig umschließt,
mit einem Umformwerkzeug (47), das als Spreizwerkzeug (48) ausgeführt ist, das am Stempel (39) des Unterwerkzeugs (37) angeordnet ist und das dazu eingerichtet ist, in der Umformposition (U) in den Rondenring (31) einzugreifen und radial zu der Arbeitsachse (A) aufgeweitet zu werden und den Innenrand (31a) umzuformen, wobei,
wobei das Oberwerkzeug (38) eine Auswerfereinrichtung (62) aufweist, die dazu eingerichtet ist, den Rondenring (31) nach dem Umformen aus der Umformposition (U) in die Transportebene (T) zurück zu bewegen,
**dadurch gekennzeichnet,**
**dass** der Stützring (40) das Umformwerkzeug (47) koaxial umschließt und dazu eingerichtet ist, bei einer Bewegung des Stempels (39) entlang der Arbeitsachse (A) in Richtung auf das Oberwerkzeug (38) zu, den Rondenring (31) aus der Transportebene (T) in die Umformposition (U) zu bewegen,
und **dass** am Oberwerkzeug (38) ein Spreizdorn (59) angeordnet ist, der zur Aufweitung des Spreizwerkzeugs (48) eingerichtet ist und der einen sich zu seinem freien Ende hin verjüngenden Abschnitt (60) aufweist.

2. Umformvorrichtung nach Anspruch 1,
**dadurch gekennzeichnet, dass** das Spreizwerkzeug (48) einen Hohlkörper bildet.

3. Umformvorrichtung nach einem der vorhergehenden Ansprüche,
**dadurch gekennzeichnet, dass** das Spreizwerkzeug (48) mehrere in Umfangsrichtung um die Arbeitsachse (A) verteilt angeordnete elastisch bewegbare Spreizelemente (50) aufweist.

4. Umformvorrichtung nach Anspruch 2 und 3,
**dadurch gekennzeichnet, dass** die Spreizelemente (50) den Hohlkörper bilden, wobei zwei in Umfangsrichtung um die Arbeitsachse (A) unmittelbar benachbarte Spreizelemente (50) durch einen Spalt (51) voneinander getrennt sind.

5. Umformvorrichtung nach Anspruch 3 oder 4,
**dadurch gekennzeichnet, dass** jedes Spreizelement (50) an seiner von der Arbeitsachse (A) weg weisenden Seite einen Umformvorsprung (53) aufweist, der dazu eingerichtet ist, sich beim Aufspreizen des Spreizwerkzeugs (48) in den Innenrand (31a) des Rondenrings (31) einzudrücken.

6. Umformvorrichtung nach Anspruch 5,
**dadurch gekennzeichnet, dass** jedes Spreizelement (50) an der dem Umformvorsprung (53) abgewandten Innenseite im Anschluss an ein freies Ende (52) eine Schrägfläche (55) hat.

7. Umformvorrichtung nach Anspruch 4 und 6,
**dadurch gekennzeichnet, dass** die Schrägflächen (55) aller Spreizelemente (50) eine konische Fläche bilden, die durch die Spalte (51) unterbrochen ist.

8. Umformvorrichtung nach einem der Ansprüche 3 bis 7,
**dadurch gekennzeichnet, dass** das Spreizwerkzeug (48) ein Basisteil (49) hat, das am Stempel (39) befestigt ist und von dem sich die Spreizelemente (50) zu ihrem jeweils freien Ende (52) hin erstrecken, und dass die Spreizelemente (50) integral ohne Naht- und Fügestelle mit dem Basisteil (49) ausgeführt sind.

9. Umformvorrichtung nach einem der vorhergehenden Ansprüche,
**dadurch gekennzeichnet, dass** die Auswerfereinrichtung (62) eine Auswerferhülse (63) aufweist, die entlang der Arbeitsachse (A) beweglich gelagert ist und durch eine zweite Federanordnung (64) in eine Ausgangslage zum Unterwerkzeug (37) hin gedrängt wird

10. Umformvorrichtung nach Anspruch 9,
**dadurch gekennzeichnet, dass** die Federkonstante der zweiten Federanordnung (64) größer ist als die Federkonstante der ersten Federanordnung (42).

11. Anordnung aufweisend eine Umformstation (27) mit einer Umformvorrichtung (30) nach einem der vorhergehenden Ansprüche und eine Transporteinrichtung (26),
wobei die Transporteinrichtung (26) einen um eine Revolverachse (R) drehbar gelagerten Revolverteller (28) aufweist, der an seinem Umfangsbereich mehrere Taschen (29) zur Aufnahme jeweils eines Rondenrings (31) aufweist, und der durch einen Revolverantrieb zum Transport eines umzuformenden Rondenrings (31) in die Umformstation (27) und eines umgeformten Rondenrings (31) aus der Umformstation (27) angetrieben wird.

12. Verfahren zum Umformen eines Innenrandes (31a) eines Rondenrings (31) unter Verwendung einer Umformvorrichtung (30) mit den Merkmalen nach einem der Ansprüche 1 bis 10, mit folgenden Schritten:
- Positionieren eines Rondenrings (31) in der Transportebene (T) koaxial zu der Arbeitsachse (A) der Umformvorrichtung (30),
- Bewegen des Stempels (39) in Richtung auf das Oberwerkzeug (38) zu, wodurch der Rondenring (31) aus der Transportebene (T) in die Umformposition (U) bewegt wird,
- Umformen des Innenrandes (31a) des Rondenrings (31) mit dem wenigstens einen Umformwerkzeug (47, 72),
- Bewegen des Stempels (39) von dem Oberwerkzeug (38) weg,
- Bewegen des umgeformten Rondenrings (31) aus der Umformposition (U) zurück in die Transportebene (T).

## Claims

1. Forming device for forming an inner rim (31a) of a round blank ring (31) of a round blank,
having a lower tool (37) comprising a die (39) that can be moved along a working axis (A),
having a support ring (40) coaxially arranged around the working axis (A) and being resiliently supported on the die (39) in the direction of the working axis (A) by means of a first spring arrangement (42),
having an upper tool (38) comprising a holding sleeve (61) that completely encloses the round blank ring (31) in the forming position (U) along the outside contour of the round blank ring (31),
having at least one forming tool (47) that is configured as a spreading tool (48), that is arranged on the die (39) of the lower tool (37) and that is configured to engage into the round blank ring (31) in the forming position (U) and to be expanded radially relative to the working axis (A) and to form the inner rim (31a),
wherein the upper tool (38) comprises an ejection device (62) configured to move the round blank ring (31), after having been formed, out of the forming position (U) and back into the transport plane (T),
**characterized in that**
the support ring (40) encloses the forming tool (47) coaxially and is configured to move the round blank ring (31) out of the transport plane (T) into the forming position (U) during movement of the die (39) along the working axis (A) in direction toward the upper tool (38),
and that a spreading mandrel (59) is arranged on the upper tool (38) that is configured for expanding the spreading tool (48) and that has a section (60) tapering toward its free end.

2. Forming device according to claim 1, **characterized in that** the spreading tool (48) forms a hollow body.

3. Forming device according to any of the preceding claims, **characterized in that** the spreading tool (48) comprises several elastically movable spreading elements (50) that are arranged in circumferential direction around the working axis (A).

4. Forming device according to claims 2 and 3, **characterized in that** the spreading elements (50) form the hollow body, wherein two spreading elements (50) directly adjacent in circumferential direction around the working axis (A) are separated from each other by a gap (51).

5. Forming device according to claims 3 and 4, **characterized in that** each spreading element (50) has, on its side facing away from the working axis (A), a forming projection (53) that is configured to press into the inner rim (31a) of the round blank ring (31) when the spreading tool (48) is expanded.

6. Forming device according to claim 5, **characterized in that** on the inner side facing away from the forming projection (53) each spreading element (50) has an inclined surface (55) adjoining the free end (52).

7. Forming device according to claims 4 and 6, **characterized in that** the inclined surfaces (55) of all spreading elements (50) form a conical surface interrupted by the gaps (51).

8. Forming device according to one of the claims 3 to 7, **characterized in that** the spreading tool (48) has a base part (49) that is mounted to the die (39) and from which the spreading elements (50) extend up to their respective free end (52), and that the spreading elements (50) are configured to be integral with the base part (49) without seam and joint.

9. Forming device according to any of the preceding claims, **characterized in that** the ejection device (32) comprises an ejection sleeve (63) that is supported so as to be movable along the working axis (A) and that is urged by a second spring arrangement (64) toward the lower tool (37) into an initial position.

10. Forming device according to claim 9, **characterized in that** the spring constant of the second spring arrangement (64) is greater than the spring constant of the first spring arrangement (42).

11. Arrangement comprising a forming station (27) with a forming device (30) according to one of the previous claims and a transport device (26),
wherein the transport device (26) comprises a revolving table (28), which is supported so as to be rotatable around a revolving axis (R), which has several pockets (29) in its circumferential region for placing one round blank ring (31) therein respectively, and which is driven by a revolving drive for transporting a round blank ring (31) to be formed into the forming station (27) and a formed round blank ring (31) out of the forming station (27).

12. Method for forming an inner rim (31a) of a round blank ring (31) by using a forming device (30) having the features according to one of the Claims 1 to 10, comprising the following steps:
- Positioning a round blank ring (31) in the transport plane (T) coaxially with respect to the working axis (A) of the forming device (30),
- Moving the die (39) in the direction toward the upper tool (38), whereby the round blank ring (31) is moved out of the transport plane (T) into the forming position (U),
- Forming the inner rim (31a) of the round blank ring (31) with the use of the at least one forming tool (47, 72),
- Moving the die (39) away from the upper tool (38),
- Moving the formed round blank ring (31) out of the forming position (U) back into the transport plane (T).

## Revendications

1. Dispositif de formage destiné à la mise en forme d'un bord intérieur (31a) d'un anneau (31) d'un flan,
comprenant un outil inférieur (37) qui présente un coulisseau (39) pouvant être déplacé le long d'un axe de travail (A),
comprenant une bague de support (40) qui est disposée de façon coaxiale avec l'axe de travail (A) et est montée sur le coulisseau (39) à l'aide d'un premier système de ressort (42), de manière élastique par rapport au coulisseau (39), dans le sens de l'axe de travail (A),
comprenant un outil supérieur (38) qui présente un châssis-support (61), lequel entoure le flan annulaire (31) complètement dans la position de formage (U), le long du contour extérieur du flan annulaire (31),
comprenant un outil de formage (47) qui est réalisé comme outil expansible (48) disposé sur le coulisseau (39) de l'outil inférieur (37) et conçu pour s'engager, dans la position de formage (U), dans le flan annulaire (31) et être écarté dans le sens radial par rapport à l'axe de travail (A) et mettre en forme le bord intérieur (31a),
sachant que l'outil supérieur (38) présente un dispositif éjecteur (62) qui est conçu pour ramener le flan annulaire (31) de la position de formage (U) dans le plan de transport (T), après le formage,
**caractérisé en ce que**
la bague de support (40) entoure l'outil de formage (47) de façon coaxiale et est conçue pour déplacer le flan annulaire (31) du plan de transport (T) à la position de formage (U), lors d'un mouvement du coulisseau (39) le long de l'axe de travail (A), en direction de l'outil supérieur (38),
et **en ce qu'**un mandrin expansible (59) est disposé sur l'outil supérieur (38) et est conçu pour écarter l'outil expansible (48) et présente une partie (60) qui se rétrécit en direction de son extrémité libre.

2. Dispositif de formage selon la revendication 1, **caractérisé en ce que** l'outil expansible (48) constitue un corps creux.

3. Dispositif de formage selon l'une des revendications précédentes, **caractérisé en ce que** l'outil expansible (48) présente plusieurs éléments expansibles (50) qui sont disposés dans la direction périphérique autour de l'axe de travail (A) et peuvent être déplacés de façon élastique.

4. Dispositif de formage selon les revendications 2 et 3, **caractérisé en ce que** les éléments expansibles (50) constituent le corps creux, sachant que deux éléments expansibles (50) qui sont directement voisins dans la direction périphérique autour de l'axe de travail (A) sont séparés l'un de l'autre par un espace (51).

5. Dispositif de formage selon la revendication 3 ou 4, **caractérisé en ce que** sur son côté orienté dans le sens opposé à l'axe de travail (A), chaque élément expansible (50) présente une saillie de formage (53) qui est conçue pour s'enfoncer dans le bord intérieur (31a) du flan annulaire (31), lors de l'écartement de l'outil expansible (48).

6. Dispositif de formage selon la revendication 5, **caractérisé en ce que** sur son côté intérieur éloigné de la saillie de formage (53), chaque élément expansible (50) comporte une surface oblique (55) située à la suite d'une extrémité libre (52).

7. Dispositif de formage selon les revendications 4 et 6, **caractérisé en ce que** les surfaces obliques (55) de tous les éléments expansibles (50) forment une surface conique qui est interrompue par les espaces (51).

8. Dispositif de formage selon l'une des revendications 3 à 7, **caractérisé en ce que** l'outil expansible (48) comporte une partie de base (49) qui est fixée au coulisseau (39) et à partir de laquelle les éléments expansibles (50) s'étendent respectivement jusqu'à leur extrémité libre (52), et **en ce que** les éléments expansibles (50) sont réalisés d'une seule pièce avec la partie de base (49), sans point de jonction ni d'assemblage.

9. Dispositif de formage selon l'une des revendications précédentes, **caractérisé en ce que** le dispositif éjecteur (62) présente une douille d'éjecteur (63) qui est montée avec possibilité de déplacement le long de l'axe de travail (A) et est poussée par un deuxième système de ressort (64) dans une position de départ, en direction de l'outil inférieur (37).

10. Dispositif de formage selon la revendication 9, **caractérisé en ce que** la constante de rappel du deuxième système de ressort (64) est plus grande que la constante de rappel du premier système de ressort (42).

11. Installation présentant un poste de formage (27) comprenant un dispositif de formage (30) selon l'une des revendications précédentes, et un dispositif de transport (26),
dans laquelle le dispositif de transport (26) présente un plateau tournant (28) qui est monté avec possibilité de rotation autour d'un axe revolver (R) et comporte dans sa zone périphérique plusieurs logements (29) destinés à recevoir chacun un flan annulaire (31), et qui est entraîné par un moyen d'entraînement revolver, en vue de transporter dans le poste de formage (27) un flan annulaire (31) devant être mis en forme, et en vue d'évacuer du poste de formage (27) un flan annulaire (31) mis en forme.

12. Procédé de formage d'un bord intérieur (31a) d'un flan annulaire (31), en utilisant un dispositif de formage (30) présentant les caractéristiques selon l'une des revendications 1 à 10, comprenant les étapes suivantes :
- positionnement d'un flan annulaire (31) dans le plan de transport (T), de façon coaxiale avec l'axe de travail (A) du dispositif de formage (30),
- déplacement du coulisseau (39) en direction de l'outil supérieur (38), ce qui a pour effet de faire passer le flan annulaire (31) du plan de transport (T) dans la position de formage (U),
- formage du bord intérieur (31a) du flan annulaire (31) avec l'outil de formage (47, 72), au nombre d'au moins un,
- déplacement du coulisseau (39) afin de l'éloigner de l'outil supérieur (38),
- déplacement du flan annulaire (31) mis en forme pour le ramener de la position de formage (U) dans le plan de transport (T).
